# FASCICULE DE BREVET EUROPEEN

(11) **EP 4 044 873 B1**
(45) Date de publication et mention de la délivrance du brevet: **21.02.2024**
(21) Numéro de dépôt: 20789632.5
(22) Date de dépôt: 16.10.2020
(51) Int. Cl.: B32B 5/02, B32B 27/12, B32B 27/36, D06M 17/04, A47G 27/04, D06N 7/00

(54) **TUILE DE TAPIS OU BANDE DE TAPIS EN POLYESTER ET PROCÉDÉ DE FABRICATION D'UNE TUILE DE TAPIS OU BANDE DE TAPIS EN POLYESTER**
POLYESTER-TEPPICHFLIESE ODER -TEPPICHSTREIFEN UND VERFAHREN ZUM HERSTELLEN EINER POLYESTER-TEPPICHFLIESE ODER EINES -TEPPICHSTREIFENS
POLYESTER CARPET TILE OR CARPET STRIP AND METHOD FOR MANUFACTURING A POLYESTER CARPET TILE OR CARPET STRIP

(30) Priorité: 17.10.2019 BE 201905714
(43) Date de publication de la demande: 24.08.2022
(73) Titulaire: De Poortere Deco SA, 7700 Mouscron (BE)
(72) Inventeur: SCHOLLIER, Bert, 7700 Mouscron (BE)
(74) Mandataire: Brantsandpatents bv
(86) Numéro de dépôt international: PCT/EP2020/079239
(87) Numéro de publication internationale: WO 2021/074395

(56) Documents cités:
- EP-A1- 3 192 906
- EP-A1- 3 196 344
- EP-A1- 3 199 678
- EP-A2- 1 533 114
- WO-A2-2012/076348
- JP-A- 2012 097 373
- US-A1- 2009 233 040

## Description

### Domaine technique

L'invention se rapporte à une tuile de tapis ou une bande de tapis qui convient au marché contractuel, en particulier des bâtiments de bureau et commerciaux.

L'invention se rapporte, dans un deuxième aspect, également à une méthode pour la fabrication d'une tuile de tapis ou d'une bande de tapis qui convient au marché contractuel, en particulier des bâtiments de bureau et commerciaux.

### État de la technique

Des tapis sont bien connus comme revêtement de sol et sont souvent utilisés comme revêtement de sol dans de grandes espaces dans des bâtiments de bureau et commerciaux. Il y est habituel de prévoir des tuiles de tapis ou des bandes de tapis. Les tuiles de tapis sont découpés en rectangles ou carrés et sont attachées à une surface de sol sur place de manière juxtaposée. Dans certains cas, des bandes de tapis sont obtenues en coupant des rouleaux de tapis plus larges de manière longitudinale. Les bandes de tapis sont déroulés sur place de manière juxtaposée sur une surface de sol. Souvent, il est nécessaire d'encore couper les tuiles de tapis ou les bandes de tapis sur mesure sur place. Cela est par exemple nécessaire pour l'installation de tuiles de tapis ou de bandes de tapis dans des coins ou aux bords d'une espace. Dans des bâtiments de bureau ou commerciaux, il n'est pas inhabituel de découper des formes dans une tuile de tapis ou une bande de tapis pendant ou après l'installation. Cela peut par exemple être nécessaire lorsqu'une prise ou un accès au réseau supplémentaire doit être installé dans une surface de sol, pour lequel un évidement est requis dans une tuile de tapis ou une bande de tapis.

Les tuiles de tapis et les bandes de tapis dans des bâtiments de bureau ou commerciaux sont fortement chargées. Chaque jour, beaucoup de personnes se déplacent sur les tuiles de tapis ou les bandes de tapis. Cela requiert que les tuiles de tapis ou les bandes de tapis pour le marché contractuel ont une haute résistance à l'usure. L'aménagement dans des bâtiments de bureau ou commerciaux peut en plus souvent changer. Des espaces peuvent obtenir d'autres destinations. Des tuiles de tapis ou des bandes de tapis peuvent dès lors de préférence facilement être installées, remplacées et recyclées.

A cause de l'aménagement flexible des bâtiments de bureau ou commerciaux, on y choisit souvent pour un sol surélevé au-dessus de la véritable surface de sol. Dans l'espace entre la véritable surface de sol et le sol surélevé, il y a de la place pour toutes les utilités. A cause de ce sol surélevé, il est recommandé d'utiliser des tuiles de tapis ou des bandes de tapis légères pour décharger le sol surélevé autant que possible. En plus, des tuiles de tapis ou des bandes de tapis légères sont plus ergonomiques pour porter par l'installateur.

Dans des bâtiments de bureau ou commerciaux, il y a souvent des exigences strictes concernant la sécurité incendie, dans lesquelles il est exigé que les tuiles de tapis et les bandes de tapis soient ignifuges. Des tuiles de tapis ou des bandes de tapis doivent au moins répondre aux exigences pour la classification Cfl-s1 selon la norme d'incendie EN 13501-1 2007.

D'autres normes qui doivent être respectées, sont la norme EN 15114 pour la détermination de la résistance au cisaillement, la norme EN 985 concernant la méthode de test de fauteuils de bureau, la norme ISO 6356 concernant la tendance de former de l'électricité statique dans des revêtements de sol en textile et en aggloméré laminé, la norme ISO 2551 pour la détermination des changements dimensionnels suite aux conditions d'eau et de chaleur variantes.

EP 0 176 346 décrit une tuile de tapis. La tuile de tapis comprend une base de tapis primaire avec des fils à poils qui s'y élèvent, une couche de base en mousse en-dessous de la base de tapis primaire, un matériel thermoplastique attachant la base de tapis primaire à la couche de base en mousse, dans lequel le matériel thermoplastique a une couche intégrée de matériel stabilisant et dans lequel la couche de base en mousse comprend un matériel de support et une mousse à haute densité, laminée sur le matériel de support.

JP 2000 308604 décrit un tissu de base pour un tapis pour le contrôle de la poussière.

JP 2000 282347 décrit un tapis à poils.

JP 2005 152159 décrit un tapis tissé.

WO 2005/113229 décrit un hybride de revêtement de sol en vinyle et de tapis rembourré doux.

EP 3 192 906 décrit un tapis résistant à l'effilochage présentant des fils fusibles.

WO 2012/076348 décrit un procédé pour fabriquer un produit textile et produit textile résultant dudit procédé.

EP 3 196 344 décrit un tapis résistant à l'effilochage présentant des fils naturels.

EP 0 176 346 a un nombre de désavantages. Dans le cas d'une telle tuile de tapis, la base de tapis primaire comprend un tapis tufté ou un tapis lié dans lequel les fils à poils sont liés dans une colle PVC ou par fusion. Lors de la coupure sur mesure ou la découpe de formes dans une tuile de tapis lors de l'installation, la couche rassemblant les fils à poils est abîmée au bord coupant chez tant un tapis tufté qu'un tapis lié. Certains fils à poils se détachent au bord et la tuile de tapis s'effiloche au bord coupant. Cela cause des joints bien visibles et une dégradation de la tuile de tapis.

L'utilisation de fils à poils offre une base de tapis primaire épaisse et agréable. Le désavantage est que des fils à poils sont moins appropriés pour utilisation dans des circonstances dans lesquelles le tapis est fortement chargé, comme par exemple dans des bâtiments de bureau et commerciaux. Les fils à poils s'usent rapidement suite au marcher fréquent sur le tapis et compliquent l'utilisation de chariots pour transporter par exemple des dossiers.

La couche de base en mousse et l'utilisation du matériel thermoplastique résultent en une tuile de tapis selon EP 0 176 346 qui est lourde. Seules ces deux couches peuvent ensemble offrir une tuile de tapis avec un poids de 2900 g/m². Cela est une charge lourde pour un sol surélevé. L'utilisation d'une couche de base en mousse comprenant un matériel de support et un matériel thermoplastique avec une couche intégrée de matériel stabilisant, dans lequel de différents matériels sont utilisés, complique le recyclage des tuiles de tapis. Cela est un grand désavantage considérant que les tuiles de tapis dans des bâtiments de bureau et commerciaux sont souvent remplacées. Tufter ou lier les fils à poils potentiellement rend le recyclage des fils à poils complexe ou partiellement impossible.

Finalement, une couche de base en mousse est très inflammable, ce qui la rend moins appropriée pour utilisation dans des bâtiments de bureau et commerciaux.

EP 3192906 A1 décrit un tapis résistant à l'effilochage et US 2009/233040 A1 un tapis résistant au feu dont toutes les parties sont en polyester.

La présente invention vise à offrir une solution pour résoudre ces inconvénients.

### Résumé de l'invention

Dans un premier aspect, la présente invention se rapporte à un dispositif selon la revendication 1.

L'avantage d'une telle tuile de tapis ou bande de tapis est qu'une partie des fils de chaîne à la face arrière du tissu tissé machinalement ou mécaniquement se sont au moins partiellement fondus les uns aux autres. Lorsque la tuile de tapis ou la bande de tapis est coupée sur mesure lors de l'installation ou lors de la découpe de formes dans la tuile de tapis ou la bande de tapis, au moins une partie des fils de chaîne restent liés mutuellement, de sorte que la solidité de la tuile de tapis ou de la bande de tapis est conservée et la tuile de tapis ou la bande de tapis s'effiloche moins au bord coupant. Cet avantage s'applique également lors de la coupure de tuiles de tapis ou de bandes de tapis pendant le processus de production.

Un deuxième avantage est que le tissu en soi est déjà assez fort et a une bonne stabilité dimensionnelle, de sorte qu'il s'effiloche moins rapidement en cas de charge suite aux maintes passages dans le bâtiment de bureau ou commercial et par des chariots. Les fils de chaîne et par conséquent également les fils de trame ont une liberté de mouvement limitée mutuelle, ce qui augmente la résistance à l'usure. Parce que le tissu est déjà renforcé grâce aux assemblages par fusion, il n'est pas nécessaire d'utiliser une couche intermédiaire lourde pour renforcer le tissu et pour laminer le tissu et le feutre aiguilleté. Une couche intermédiaire plus légère peut être utilisée pour laminer uniquement le tissu et le feutre aiguilleté. Ceci mène à une réduction de poids par unité de surface pour la tuile de tapis ou la bande de tapis. Puisque la colle ne doit pas être mélangée partiellement avec les fils de chaîne et de trame, il est plus facile de séparer et de recycler le tissu et le feutre aiguilleté.

En plus, l'invention utilise du 100% polyester (PES) thermoplastique ignifuge pour tant le tissu que le feutre aiguilleté. Par conséquent, la tuile de tapis ou la bande de tapis répond à la norme FAR 25.853 concernant l'inflammabilité.

La tuile de tapis ou la bande de tapis répond également au moins aux exigences pour la classification Cfl-s1 selon la norme d'incendie EN 13501-1 2007. En plus, il y a un avantage supplémentaire que, suite à l'utilisation uniquement du polyester (PES) ignifuge, le traitement de recyclage du tissu et du feutre aiguilleté se fait simultanément.

Des modes de réalisations préférés du dispositif sont décrits dans les revendications 2 à 9.

Dans un mode de réalisation spécifique, l'invention se rapporte à un dispositif selon la revendication 7. Dans la couche intermédiaire, le PES est également utilisé comme adhésif pour laminer le tissu et le feutre aiguilleté. Ceci améliore le recyclage encore plus. Maintenant, il n'est même plus nécessaire de séparer le tissu et le feutre aiguilleté. La couche intermédiaire peut même être traitée et recyclée ensemble avec le tissu et le feutre aiguilleté.

Dans un deuxième aspect, la présente invention se rapporte à une méthode selon la revendication 10. Parce que, avant que le tissu et le feutre aiguilleté soient laminés, le tissu est mené le long d'une surface chauffée pour fondre au moins partiellement une partie des fils de chaîne à la face arrière du tissu machinalement ou mécaniquement tissé mutuellement, ladite méthode a entre autres l'avantage que, lors de la coupure jusqu'aux tuiles de tapis ou de bandes de tapis, les tuiles de tapis ou les bandes de tapis s'effilocheront moins au bord coupant. En plus, un tissu est obtenu qui est suffisamment fort et a une stabilité dimensionnelle. Le tissu peut être laminé au feutre aiguilleté avec une couche intermédiaire légère et le tissu et le feutre aiguilleté peut facilement être séparé ultérieurement pour être recyclés.

Des modes de réalisations préférés du dispositif sont décrits dans les revendications dépendantes 11 à 15.

Dans un mode de réalisation spécifique, l'invention se rapporte à un dispositif selon la revendication 14. Lors de la coupure jusqu'aux tuiles de tapis ou bandes de tapis, une partie des fils de chaîne et de trame se sont alors au moins partiellement fondus mutuellement. Cela renforce de manière supplémentaire le bord coupant et diminue encore plus l'effilochement du bord coupant.

Dans un troisième aspect, la présente invention se rapporte à la fabrication d'une tuile de tapis ou d'une bande de tapis selon le premier aspect, à l'aide d'une méthode selon le deuxième aspect.

### Description des figures

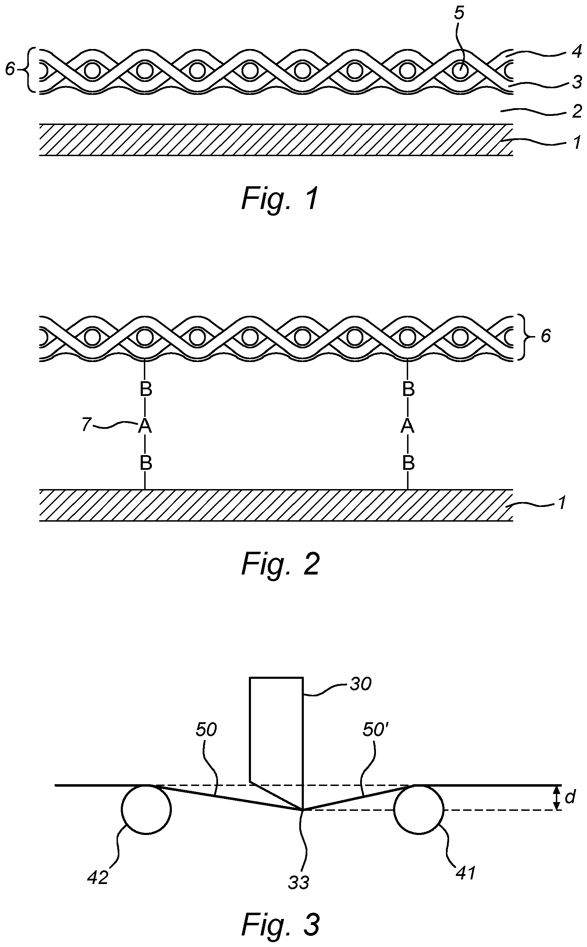

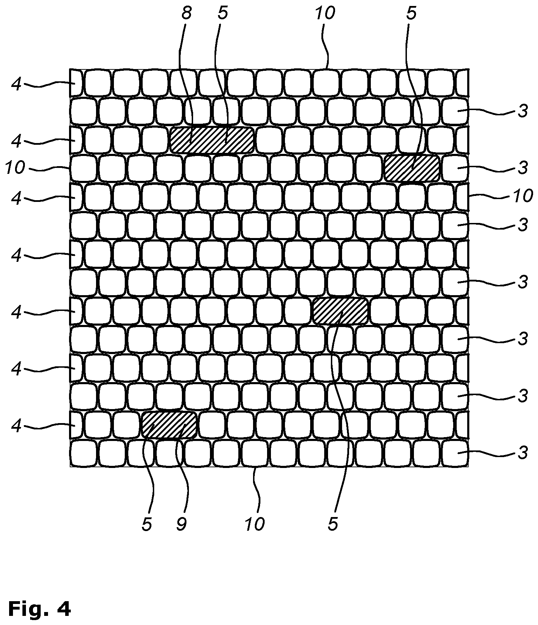

**La** **figure 1** montre une section d'un mode de réalisation de la présente invention.
**La** **figure 2** montre schématiquement un modèle moléculaire d'une liaison entre un tissu et un feutre aiguilleté selon un mode de réalisation de la présente invention.
**La** **figure 3** montre un dispositif approprié pour au moins partiellement fondre une partie des fils de chaîne les uns aux autres selon un mode de réalisation de la méthode de la présente invention.
**La** **figure 4** montre une vue d'en haut d'un mode de réalisation de la présente invention.

### Description détaillée

Sauf mention contraire, tous les termes utilisés dans la description de l'invention, y compris des termes techniques et scientifiques, sont utilisés dans le sens comme compris généralement par le spécialiste dans le domaine technique de l'invention. Pour un meilleur jugement de la description de l'invention, les termes suivants sont expliqués explicitement.

"Un", "une", "le", "la" et "les" renvoient dans ce document tant au singulier qu'au pluriel sauf dans le cas le contexte suppose clairement différemment. "Un segment" veut, par exemple, dire un ou plus d'un segment.

Quand "environ" ou "à peu près" est utilisé dans ce document, une grandeur mesurable, un paramètre, une durée ou moment etcétéra veut dire des variations de +/-20% ou moins, de préférence +/-10% ou moins, plus de préférence +/-5% ou moins, encore plus de préférence +/-1% ou moins, et même encore plus de préférence +/-0,1% ou moins de la valeur citée, tant que de telles variations s'appliquent au susdite invention. Cependant, la valeur de la grandeur avec laquelle le terme "environ" ou "à peu près" est utilisé, doit elle-même spécifiquement être exprimée.

Les termes "comprendre", "comprenant", "composer de", "composé de", "prévu de", "comporter", "comportant", "contenir", "contenant" sont des synonymes et sont des termes inclusifs ou ouverts indiquant la présence de ce qui suit, et ne pas excluant ou empêchant d'autres composants, caractéristiques, éléments, membres, phases, connus de ou décrits dans l'état de la technique.

La citation d'intervalles numériques au moyen de points finaux comprend tous les entiers, les fractions et/ou les nombres réels entre les points finaux, y compris ces points finaux.

Le terme "thermoplastique" renvoie à un matériel polymère qui peut être plié, pétri ou liquéfié au-dessus d'une température spécifique et qui durcit substantiellement après refroidissement. Des exemples des polymères thermoplastiques comprennent, mais ne sont pas limités au, vinyle comprenant des thermoplastiques: telles que du polychlorure du vinyle, de l'acétate du polyvinyle, de l'alcool du polyvinyle et d'autres résines de vinyle et de vinylidène et ses copolymères; des composés de polyéthylène: tels que du polyéthylène à basse densité et du polyéthylène à haute densité et ses copolymères; des composés de styrène: tels que l'ABS, le SAN et les polystyrènes et ses copolymères, du polypropylène et ses copolymères; des polyesters saturés et non-saturés; l'acrylique; les polyamides; le plastique de l'engineering tel que l'acétyle, le polycarbonate, le polyimide, le polysulfon, l'oxyde de polyphenylène et les résines de sulfide et autres.

Le terme "flotteur" renvoie à une section d'un fil apparaissant à la surface d'un tissu. Des flotteurs peuvent être des flotteurs supérieurs et/ou des flotteurs inférieurs. Le terme "flotteur supérieur" renvoie à une section d'un fil apparaissant au dessus d'un tissu. Un flotteur supérieur est formé par un patron de liaison avec une densité de liaison de chaîne:trame de 2:1, 3:1, 4:1, 5:1, 6:1, 7:1, 8:1, 9:1, 10:1 ou plus. Cela veut dire que chaque fil de trame flotte au-dessus au moins deux fils de chaîne, au-dessus au moins 3 fils de chaîne, etc. Alternativement, chaque fil de chaîne flotte au-dessus au moins deux fils de trame, au-dessus au moins 3 fils de trame, etc. Le terme "flotteur inférieur" renvoie à une section d'un fil apparaissant au dessous d'un tissu. Un flotteur inférieur est formé par un patron de liaison avec une densité de liaison de chaîne:trame de 1:2, 1:3, 1:4, 1:5, 1:6, 1:7, 1:8, 1:9, 1:10 ou moins. Cela veut dire que chaque fils de trame flotte en-dessous au moins deux fils de chaîne, en-dessous au moins 3 fils de chaîne, etc. Alternativement, chaque fil de chaîne flotte en-dessous au moins deux fils de trame, en-dessous au moins 3 fils de trame, etc. Le terme "liaison" est utilisé pour renvoyer au tissage de fils de trame avec des fils de chaîne pour former un tissu.

Le terme "flotteur de trame" renvoie à un flotteur formé par des fils de trame. Le terme "flotteur de chaîne" renvoie à un flotteur formé par des fils de chaîne.

Le numéro de fil renvoie à l'épaisseur du fil. La mesure est indiquée comme le rapport entre le poids et la longueur d'une pièce de fil. Lors de la numérotation de poids, le poids d'une longueur de fil fixe est déterminé. Lors de la numérotation de longueur, la longueur d'un poids de fil fixe est déterminée. Tex est un exemple de numérotation de poids, dans lequel tex indique le poids en gramme de 1000 m de fils. Dtx est utilisé plus souvent, qui est le poids en gramme de 10 000 m de fils. Un autre exemple de la numérotation de poids est denier, dénoté den, dans lequel le poids en gramme de 9000 m de fils est indiqué. Pour des fils comprenant des filaments, la numérotation de poids en denier s'utilise également pour des filaments. Dernier par filament ou DPF renvoie au numéro de poids d'un filament du fil.

Le terme "effilochement" est utilisé ici pour décrire le phénomène que les fils aux côtés latéraux d'un tapis se détachent et deviennent clairement visibles visuellement. La coupure d'un tapis cause un risque élevé d'effilochement. En effet, lors de la coupure, des fils et/ou liaisons entre les fils sont coupés; par conséquent, des fils au niveau du plan de coupe peuvent se détacher plus facilement et deviennent clairement visibles visuellement.

Dans un premier aspect, l'invention se rapporte à une tuile de tapis ou une bande de tapis qui convient au marché contractuel, plus particulièrement des bâtiments de bureau et commerciaux.

Selon un mode de réalisation, le dispositif comprend un tissu tissé machinalement ou mécaniquement, comprenant une face avant comme surface d'utilisation et une face arrière, comprenant des fils de chaîne et de trame d'essentiellement 100% de polyester (PES) thermoplastique ignifuge, un feutre aiguilleté d'essentiellement 100% de polyester (PES) thermoplastique ignifuge, une couche intermédiaire entre le feutre aiguilleté et le tissu tissé machinalement ou mécaniquement, dans lequel une partie des fils de chaîne à la face arrière du tissu tissé machinalement ou mécaniquement se sont fondus au moins partiellement les uns aux autres.

Le tissu comprend une face avant et une face arrière. La face avant est la surface d'utilisation sur laquelle des passants dans un bâtiment de bureau ou commercial marchent et sur laquelle des chariots roulent. Après l'installation, c'est la partie visible de la tuile de tapis ou de la bande de tapis.

Un tissu a l'avantage par rapport au tapis tufté qu'une base, telle qu'un tissu ou un feutre aiguilleté, n'est pas requise, par quoi un fil à poils est percé. Par l'absence de base dans un tissu, le poids peut être réduit par rapport au tapis tufté. En plus, des tapis tuftés sont souvent à longs poils, ce qui gêne pour rouler avec des chariots. En plus, de tels tapis à longs poils s'usent par conséquent plus rapidement.

Le tissu est de préférence un tissu lisse. Un tissu à poils a le même désavantage qu'un tapis tufté à longs poils lors de l'utilisation de chariots. Un tissu à poils s'usera de nouveau plus rapidement. Un deuxième désavantage des tissus à poils est qu'à côté du fil de poils qui est utilisé pour former les poils, le fil de chaîne comprend également des fils supplémentaires pour lier les poils. Par conséquent, le tissu devient plus lourd comparé à un tissu lisse.

Le tissu a de préférence une liaison lisse. Lors d'une liaison lisse, chaque fil de trame s'étend alternativement au-dessus et en-dessous un fil de chaîne et chaque fil de chaîne s'étend alternativement au-dessus et en-dessous un fil de trame. Cela est la liaison la plus simple et la plus forte possible. La charge lourde quotidienne du tissu par les passants dans un bâtiment de bureau ou commercial et des chariots peut arracher les fils de chaîne et de trame et réduire la stabilité dimensionnelle. Une liaison forte est avantageuse pour combattre cela. Additionnellement, une forte liaison garantira que les fils de chaîne et de trame seront moins mobiles les uns par rapport aux autres sous l'influence de la charge des passants dans un bâtiment de bureau ou commercial et des chariots, de sorte qu'il y ait moins de friction entre les fils et par conséquent, qu'il y ait moins d'usure. Cela n'a pas d'influence sur l'usure des fils suite aux frictions avec par exemple des chaussures des passants et des roues des chariots.

Selon un autre mode de réalisation, la liaison dans le tissu est un reps de trame. Chaque fil de trame s'étend alternativement au-dessus et en-dessous deux fils de chaîne juxtaposés et chaque fil de chaîne alternativement au-dessus et en-dessous un fils de trame. Cela offre un autre effet visuel que lors d'une liaison lisse. Parce que le fil de trame s'étend uniquement au-dessus ou en-dessous deux fils de chaîne juxtaposés lors qu'un reps de trame, ceci est toujours une liaison forte.

Le tissu a de préférence un nombre de flotteurs limité, tant des flotteurs supérieurs que des flotteurs inférieurs. Des flotteurs peuvent être utilisés en combinaison avec des fils de couleur différente pour tisser des patrons, des emblèmes ou des indications dans le tissu. Le désavantage de l'utilisation de flotteurs est qu'elle introduit une déviation d'une liaison lisse et dès lors affaiblit la liaison dans le tissu localement. Des flotteurs ont de préférence une densité de liaison inférieure ou égale à 5: 1 et supérieure ou égale à 1:5, plus de préférence une densité de liaison inférieure ou égale à 3:1 et supérieure ou égale à 1:3, et même plus de préférence inférieure ou égale à 2:1 et supérieure ou égale à 1:2.

Selon un mode de réalisation, le tissu est un tissu Jacquard. Un tissu Jacquard comprend des patrons et/ou des emblèmes complexes qui ne peuvent pas être tissés à l'aide de cadres sur une machine à tisser. Le tissage avec des cadres signifie que tous les fils de chaîne qui sont passés à travers un même cadre, se situent à chaque fil de trame dans le tissu soit tous à l'un côté soit à l'autre côté du fil de trame. Un tissu Jacquard est tissé à l'aide d'une machine à tisser avec un Jacquard. Le Jacquard permet qu'un fil de chaîne individuel se situe dans une position à l'un côté ou à l'autre côté du fil de trame, indépendant de la position des autres fils de chaîne.

Le tissu comprend des fils de chaîne et de trame d'essentiellement 100% de polyester (PES) thermoplastique ignifuge. Le PES est très fort, est rigide, a une bonne stabilité dimensionnelle et peu de fluage. Il est donc approprié pour application lors d'une haute charge en utilisation. Le fil n'est pas attaqué par des moisissures et des bactéries. Cela est avantageux parce que, par exemple, dans un bâtiment de bureau ou commercial, on peut renverser du café ou une autre boisson, ce qui peut mener à des moisissures et des bactéries. Le PES n'absorbe presque pas de liquides. Il est bien résistant aux acides, aux moyens d'oxydation et aux lessives alcalines diluées. Il peut être stérilisé à l'aide de vapeur. Grâce à ces caractéristiques, le tissu est approprié pour être nettoyé de manière efficace et rapide. Cela est avantageux pour un bâtiment de bureau ou commercial vu le temps limité qui est disponible pour une équipe de nettoyage.

Du PES ignifuge a une résistance à la chaleur excellente. Il est difficilement inflammable, il éteint les flammes et résulte en un développement de fumées limité.

Grâce à ces caractéristiques, il est possible de répondre au moins exigences pour la classification Cfl-s1 selon la norme d'incendie EN 13501-1 2007.

Du PES ignifuge a une résistance à la chaleur excellente. Il est difficilement inflammable, il éteint les flammes et résulte en un développement de fumées limité. Grâce à ces caractéristiques, il est possible de répondre à la norme FAR 25.853 concernant l'inflammabilité.

La tuile de tapis ou la bande de tapis comprend un feutre aiguilleté d'essentiellement 100% de polyester (PES) thermoplastique ignifuge. Par conséquent, le feutre aiguilleté répond au moins aux exigences pour la classification Cfl-s1 selon la norme d'incendie EN 13501-1 2007.

La tuile de tapis ou la bande de tapis comprend un feutre aiguilleté d'essentiellement 100% de polyester (PES) thermoplastique ignifuge. Par conséquent, le feutre aiguilleté répond à la norme FAR 25.853 concernant l'inflammabilité.

Le feutre aiguilleté est un textile non-tissé. Le feutre aiguilleté a une épaisseur de 1 mm à 8 mm, de préférence de 1 mm à 6 mm, plus de préférence de 1 mm à 5 mm et même plus de préférence de 1 mm à 4 mm.

Le feutre aiguilleté est attaché à la face arrière du tissu à l'aide de la couche intermédiaire. Le feutre aiguilleté est approprié pour renforcer le tissu de manière mécanique. Il est approprié pour offrir de la rigidité à la tuile de tapis ou la bande de tapis aux bords coupants, pour donner une haute stabilité dimensionnelle à la tuile de tapis ou la bande de tapis, pour augmenter le confort de marcher sur la tuile de tapis ou la bande de tapis et pour améliorer l'isolation sonore et ainsi l'acoustique dans un bâtiment de bureau ou commercial.

Parce que le feutre aiguilleté est un textile non-tissé, la tuile de tapis ou la bande de tapis est appropriée pour être installée et remplacée rapidement dans un bâtiment de bureau ou commercial. La tuile de tapis ou la bande de tapis peut être attachée à une surface de sol ou un sol surélevé au moyen de bandes de velcro. Les bandes de velcro sont collées sur la surface de sol ou le sol surélevé. Les crochets de la bande de velcro s'accrochent dans les fils du feutre aiguilleté, de sorte que la tuile de tapis ou la bande de tapis soit immobilisée. La tuile de tapis ou la bande de tapis peut facilement être enlevée en arrachant la tuile de tapis ou la bande de tapis de la bande de velcro. Les bandes de velcro sont réutilisables et restent adhérées à la surface de sol ou au sol surélevé. Une nouvelle tuile de tapis ou bande de tapis selon l'invention peut facilement être installée en adhérant la nouvelle tuile de tapis ou bande de tapis aux bandes de velcro déjà présentes, de sorte que la nouvelle tuile de tapis ou bande de tapis soit immobilisée. Il est clair pour l'homme du métier que la tuile de tapis ou bande de tapis selon la présente invention peut également être installée au moyen de colle, d'un adhésif double-face ou simplement détaché sur la surface de sol ou le sol surélevé.

Une bande de velcro est faite d'un matériel ignifuge et répond à la norme FAR 25.853 (a)(1)(ii) concernant l'inflammabilité. Un exemple non-limité d'un matériel approprié est le polyamide PA6. Le poids est de préférence inférieur à 0,60 kg/m², plus de préférence inférieur à 0,55 kg/m², encore plus de préférence inférieur à 0,55 kg/m² et même encore plus de préférence inférieur à 0,45 kg/m². La bande de velcro comprend des crochets à une face de la bande, configurés pour accrocher les fils, et à la face opposée, un adhésif. L'adhésif a une force d'adhésion d'au moins 10,0 N/cm, de préférence d'au moins 12,0 N/cm et même plus de préférence d'au moins 13,0 N/cm. La force requise pour arracher la tuile de tapis des crochets de la bande de velcro est au moins 0,60 N/cm, de préférence au moins 0,70 N/cm et encore plus de préférence au moins 0,80 N/cm. La force de cisaillement de la bande de velcro s'élève à au moins 20 N/cm², de préférence au moins 25 N/cm² et même plus de préférence au moins 29 N/cm². La tension de boucle s'élève à au moins 5 N/cm², de préférence au moins 7 N/cm² et même plus de préférence au moins 8 N/cm². Un exemple non-limité d'une bande de velcro appropriée est HTH 577 de la firme Velcro.

Le tissu a un poids d'au maximum 1100 g/m². Le feutre aiguilleté a un poids d'au maximum 900 g/m². La couche intermédiaire a un poids d'au maximum 250 g/m². Le poids total d'une tuile de tapis ou d'une bande de tapis est ainsi au maximum 2250 g/m². Une tuile de tapis ou bande de tapis standard peut peser jusqu'à 3000 g/m² ou même plus. Cela rend une tuile de tapis ou une bande de tapis selon l'invention appropriée pour utilisation dans un bâtiment de bureau ou commercial, en particulier sur un sol surélevé. La tuile de tapis ou la bande de tapis est aussi plus ergonomique pour porter par l'installateur.

Une partie des fils de chaîne du tissu tissé machinalement ou mécaniquement se sont fondus mutuellement au moins partiellement à la face arrière. Un fil de chaîne s'est fondu de préférence sur au moins 10% de sa longueur, plus de préférence sur au moins 20% de sa longueur, encore plus de préférence sur au moins 30% et même encore plus de préférence sur au moins 50% de sa longueur avec les fils de chaîne juxtaposés. Lorsqu'une tuile de tapis ou bande de tapis est coupée sur mesure lors de l'installation ou lors de la découpe de formes dans la tuile de tapis ou la bande de tapis, au moins une partie des fils de chaîne restent liés mutuellement, de sorte que la solidité et la stabilité dimensionnelle de la tuile de tapis ou de la bande de tapis est conservée et la tuile de tapis ou la bande de tapis s'effiloche moins au bord coupant. Cet avantage s'applique également lors de la coupure de tuiles de tapis ou de bandes de tapis pendant le processus de production.

Parce qu'une partie des fils de chaîne se sont fondus les uns aux autres, les fils de chaîne sont mobiles les uns par rapport aux autres de manière limitée. Dès lors, il y a moins de friction entre les fils et donc également moins d'usure. Cela renforce le tissu et la tuile de tapis ou bande de tapis. Dans le cas de tuiles de tapis ou de bandes de tapis selon l'état de la technique, le tissu est renforcé par l'application d'une couche de colle ou d'un revêtement par fusion adhérant les noeuds du tissu. La colle ou le revêtement par fusion doit alors pénétrer entre les fils du tissu, de sorte que plus de colle ou de revêtement par fusion est nécessaire que simplement pour attacher le tissu au feutre aiguilleté. Dans le cas d'une tuile de tapis ou d'une bande de tapis selon l'invention, il y a dès lors une réduction de poids supplémentaire par rapport à l'état de la technique. Un autre avantage qu'il n'est pas nécessaire que la colle ou le revêtement par fusion pénètre entre les fils, de sorte qu'il est plus simple de recycler les fils du tissu et le feutre aiguilleté.

Selon un mode de réalisation, une partie des fils de chaîne et de trame se sont alors au moins partiellement fondus mutuellement au bord des tuiles de tapis ou des bandes de tapis. Cela renforce de manière supplémentaire le bord coupant et diminue encore plus l'effilochement du bord coupant. Il n'est pas nécessaire de renforcer les bords des tuiles de tapis ou des bandes de tapis avec une piqûre ou une couche de colle supplémentaire ou un revêtement sur le bord, de sorte que l'on réduise le poids.

De préférence chez au moins 10% des croisements entre les fils de chaîne et de trame, plus de préférence chez au moins 20% des croisements entre les fils de chaîne et de trame, encore plus de préférence chez au moins 30% des croisements entre les fils de chaîne et de trame et même encore plus de préférence chez au moins 50% des croisements entre les fils de chaîne et de trame, les fils de chaîne et de trame se sont fondus mutuellement.

Selon un mode de réalisation, le numéro de fil des fils de chaîne et de trame est 1100 dtex à 4400 dtex.

Un numéro de fil supérieur signifie un fil plus lourd et plus épais. Un numéro de fil élevé est indiqué pour des tissus lourds et forts avec une haute stabilité dimensionnelle. Un numéro de fil bas est indiqué pour des tissus légers et souples. Une tuile de tapis ou une bande de tapis de transport est de préférence légère, forte et maintient sa forme sous la charge quotidienne des passants dans un bâtiment de bureau ou commercial. Un numéro de fil de 1100 dtex à 4400 dtex, de préférence de 1500 dtx à 3700 dtex et encore plus de préférence de 1800 dtex à 3100 dtex est indiqué pour une tuile de tapis ou une bande de tapis. La tuile de tapis ou la bande de tapis est alors suffisamment légère et forte.

Les fils de trame et de chaîne comprennent des filaments. Pour obtenir un tissu léger, des filaments légers sont indiqués. Le filament a un numéro de poids de 2 DPF à 20 DPF, de préférence de 2 DPF à 15 DPF, plus de préférence de 2 DPF à 10 DPF et même plus de préférence de 2 DPF à 5 DPF.

Dans un mode de réalisation alternatif, il est nécessaire de rendre le tissu plus fort pour obtenir une stabilité dimensionnelle suffisante. Dans ce cas, des filaments légèrement plus forts sont indiqués. Le filament a un numéro de poids de 2 DPF à 20 DPF, de préférence de 5 DPF à 20 DPF, plus de préférence de 8 DPF à 20 DPF et même plus de préférence de 10 DPF à 20 DPF.

Selon un mode de réalisation, des fils de trame et de chaîne sont des soi-disant fils de filament continus et les fils comprennent des filaments continus.

Selon un mode de réalisation, des fils de trame et de chaîne sont des soi-disant fils de filament continus et les fils comprennent des filaments continus, dans lequel la texture des fils est modifiée à l'aide de jets d'air, dans lequel de petites boucles sont formées. Cela offre une isolation et résistance supplémentaire.

Selon un mode de réalisation, le nombre de fils de chaîne par cm de tissu est entre 8 et 30 et le nombre de fils de trame par cm de tissu est entre 3 et 10.

Le nombre de fils de chaîne par cm de tissu détermine aussi la densité du tissu. Un tissu plus dense sera plus fort et aura plus de stabilité dimensionnelle, mais il sera également plus lourd. En cas d'un nombre plus bas de fils de chaîne par cm de tissu, le tissu est plus léger et souple, mais il sera moins fort et aura moins de stabilité dimensionnelle. Le nombre de fils de chaîne par cm de tissu s'élève de 8 à 30, de préférence de 13 à 25, encore plus de préférence de 15 à 20. La tuile de tapis ou la bande de tapis est alors suffisamment légère et forte.

Le nombre de fils de trame par cm de tissu détermine aussi la densité du tissu. Un tissu plus dense sera plus fort et aura plus de stabilité dimensionnelle, mais il sera également plus lourd. En cas d'un nombre plus bas de fils de trame par cm de tissu, le tissu est plus léger et souple, mais il sera moins fort et aura moins de stabilité dimensionnelle. Le nombre de fils de trame par cm de tissu s'élève de 3 à 10, de préférence de 3 à 8, encore plus de préférence de 3 à 7. La tuile de tapis ou la bande de tapis est alors suffisamment légère et forte.

Selon un mode de réalisation, le poids par unité de surface de la tuile de tapis ou de la bande de tapis s'élève maximum à 2000 g/m².

Le poids de la tuile de tapis et de la bande de tapis est déterminé par le poids du tissu, de la couche intermédiaire et du feutre aiguilleté. Le poids de la tuile de tapis ou de la bande de tapis peut être optimisé par un choix méticuleux du tissu, de la couche intermédiaire et du feutre aiguilleté. Un tissu plus lourd est en soi déjà plus fort et requiert un feutre aiguilleté plus mince pour une bonne stabilité dimensionnelle. Parce qu'une partie des fils de chaîne du tissu tissé machinalement ou mécaniquement se sont fondus mutuellement à la face arrière au moins partiellement, la couche intermédiaire est minimale. La couche intermédiaire est la liaison entre le tissu et le feutre aiguilleté. Un tissu plus léger requiert un feutre aiguilleté légèrement plus épais pour une bonne stabilité dimensionnelle. La couche intermédiaire peut toujours être minimale. Grâce à un bon choix de l'épaisseur du tissu, entre autres déterminé par le numéro de fil, le nombre de fil de chaîne par cm de tissu et le nombre de fils de trame par cm de tissu, et un feutre aiguilleté approprié, le poids de la tuile de tapis ou de la bande de tapis s'élève maximum à 2000 g/m², de préférence maximum à 1900 g/m², encore plus de préférence maximum à 1800 g/m² et même encore plus de préférence à 1700 g/m².

Selon un mode de réalisation, le tissu tissé machinalement ou mécaniquement et le feutre aiguilleté sont laminés l'un à l'autre à l'aide de la couche intermédiaire.

Le tissu tissé machinalement ou mécaniquement et le feutre aiguilleté sont liés mutuellement. Le feutre aiguilleté offre la stabilité dimensionnelle et renforce le tissu parce qu'il est lié au tissu. Le tissu et le feutre aiguilleté sont laminés l'un à l'autre à l'aide de la couche intermédiaire.

Selon un mode de réalisation, la couche intermédiaire comprend l'adhésif PES.

Grâce à l'utilisation de PES en tant qu'adhésif, la tuile de tapis ou la bande de tapis peut être recyclée facilement. Tant le tissu, le feutre aiguilleté que l'adhésif dans la couche intermédiaire comprennent du PES, de sorte que la tuile de tapis ou la bande de tapis complète puisse être recyclée collectivement. Il n'est pas nécessaire de séparer le tissu et le feutre aiguilleté. L'adhésif PES est par exemple un film adhésif par fusion de PES, une poudre par fusion de PES ou un autre moyen approprié.

Selon un mode de réalisation, la tuile de tapis ou la bande de tapis comprend des molécules réactives pour former des interactions covalentes thermoréversibles dans la couche intermédiaire.

Ce mode de réalisation permet d'inverser les interactions covalentes en réchauffant la tuile de tapis ou la bande de tapis. Ceci contribue à un recyclage simple de la tuile de tapis ou de la bande de tapis. En inversant la réaction entre les molécules réactives, la structure de liaison originale dans la couche intermédiaire, liant le tissu et le feutre aiguilleté, se décompose en molécules plus petites. Ces molécules plus petites peuvent être enlevées plus facilement du tissu et du feutre aiguilleté qu'une colle traditionnelle ou un revêtement par fusion. Il est par exemple possible de dissoudre les molécules plus petites résiduelles dans un solvant doux et de récupérer ces molécules du solvant par la suite. Une autre possibilité est de recycler les molécules ensemble avec le tissu et/ou le feutre aiguilleté, par exemple en mélangeant les molécules avec les fils du tissu et/ou du filament du feutre aiguilleté.

Des réactions covalentes thermoréversibles sont déjà connues de la chimie. Une liste non-limitative d'exemples sont des réactions Michael, des réactions de dimérisation nitroso, des réactions anhydrides cycliques dans lequel les composés d'ester sont formés, des réactions de formation d'uréthane, des réactions de formation d'ions aliphatiques et des réactions de formation d'adduction de phénol-azlactone.

Selon un autre mode de réalisation, la réaction est entre une première molécule, comprenant un groupe de diène conjugué et une deuxième molécule comprenant un groupe diénophyle. On renvoie à de telles réactions entre un groupe de diène conjugué et un groupe diénophyle par des réactions Diels-Alder. L'avantage des réactions Diels-Alder est que l'inversibilité thermique peut se passer à des températures relativement basses. Cela peut éviter des dommages éventuels physiques et chimiques au tissu et au feutre aiguilleté.

Un diène conjugué est un hydrogène acyclique avec une structure moléculaire comprenant deux composés doubles hydrogène-hydrogène, séparés par un composé simple. Le groupe de diène conjugué peut faire partie d'une molécule comprenant d'autres atomes que le carbone et l'hydrogène. Un diénophyle est le composant alcène (double composé du carbone) d'une réaction entre un alcène et un diène. Le groupe diénophyle peut faire partie d'une molécule comprenant d'autres atomes que le carbone et l'hydrogène.

Selon un autre mode de réalisation, le groupe diène est un furane (tel que le furfuryl), anthracène, thiophène ou pyrrole. Le groupe diénophyle est un maléimide, fumarate, maléate ou alkyne. Ces groupes sont appropriés pour application dans l'invention. Il est clair que ce mode de réalisation n'exclut pas l'utilisation d'autres groupes diène et/ou groupes diénophyles.

Selon un mode de réalisation, une partie des fils de trame à la face arrière du tissu tissé machinalement ou mécaniquement se sont fondus au moins partiellement avec une partie des fils de chaîne.

Parce qu'une partie des fils de trame se sont fondus avec les fils de chaîne, les fils de trame et de chaîne sont mobiles les uns par rapport aux autres de manière limitée. Une partie des noeuds des fils de trame et de chaîne sont dès lors fixés. Dès lors, la stabilité dimensionnelle est augmentée et il y a moins de friction entre les fils mutuels et donc également moins d'usure. Cela renforce le tissu et la tuile de tapis ou bande de tapis. Dans une solution pour renforcer un tissu selon l'état de la technique, le tissu est renforcé par l'application d'une couche de colle ou d'un revêtement par fusion adhérant les noeuds du tissu. La colle ou le revêtement par fusion doit alors pénétrer entre les fils du tissu, de sorte que plus de colle ou de revêtement par fusion est nécessaire que simplement pour attacher le tissu au feutre aiguilleté. Dans le cas d'une tuile de tapis ou d'une bande de tapis selon l'invention, il y a dès lors une réduction de poids supplémentaire par rapport à l'état de la technique. Un autre avantage qu'il n'est pas nécessaire que la colle ou le revêtement par fusion pénètre entre les fils, de sorte qu'il est plus simple de recycler les fils du tissu et le feutre aiguilleté.

Selon un mode de réalisation, la tuile de tapis ou la bande de tapis comprend une membrane d'essentiellement 100% de polyester (PES) entre le tissu tissé machinalement ou mécaniquement et la couche intermédiaire.

La membrane est également un textile non-tissé. Elle est très mince. L'épaisseur de la membrane est au maximum 0,5 mm, de préférence au maximum 0,3 mm, encore plus de préférence au maximum 0,2 mm, et même plus de préférence au maximum 0,1 mm. Le poids de la membrane est au maximum 150 g/m², de préférence au maximum 100 g/m², encore plus de préférence au maximum 50 g/m², et même plus de préférence au maximum 40 g/m².

Une membrane de 100% polyester (PES) garantit le recyclage complet de la tuile de tapis ou de la bande de tapis.

A cause des dimensions limitées d'une tuile de tapis, la stabilité dimensionnelle du tissu tissé machinalement ou mécaniquement peut être plus limitée que celle d'un tapis. Par conséquent, il est possible qu'une tuile de tapis se rétrécit après installation, ce qui cause des joints visibles entre les tuiles de tapis. Cela est également le cas d'une bande de tapis dans une direction transversale à la direction longitudinale de la bande de tapis. Suite au rétrécissement d'une bande de tapis après l'installation, les passages entre les bandes de tapis sont mieux visibles. Une membrane entre le tissu tissé machinalement ou mécaniquement et la couche intermédiaire est appropriée pour augmenter la stabilité dimensionnelle de la tuile de tapis ou de la bande de tapis dans toutes les directions parallèles à la surface d'utilisation de la tuile de tapis ou de la bande de tapis.

Dans un deuxième aspect, l'invention se rapporte à une méthode pour la fabrication d'une tuile de tapis ou d'une bande de tapis qui convient au marché contractuel, en particulier des bâtiments de bureau et commerciaux.

Selon un mode de réalisation, la méthode comprend les phases du tissage machinal ou mécanique d'un tissu, comprenant une face avant comme surface d'utilisation et une face arrière, comprenant des fils de chaîne et de trame d'essentiellement 100% de polyester (PES) thermoplastique ignifuge, la fabrication d'un feutre aiguilleté d'essentiellement 100% de polyester (PES) thermoplastique ignifuge, la lamination du feutre aiguilleté au tissu à l'aide d'une couche intermédiaire, la coupure jusqu'aux tuiles de tapis ou bandes de tapis, dans lequel la méthode comprend la phase supplémentaire avant la lamination de mener la face arrière du tissu le long d'une surface chauffée pour faire fondre au moins partiellement une partie des fils de chaîne à la face arrière du tissu tissé machinalement ou mécaniquement.

Le tissu a préférablement un poids de maximum 1100 g/m². Le feutre aiguilleté a un poids de maximum 900 g/m². La couche intermédiaire a un poids de maximum 250 g/m².

Le tissage machinal ou mécanique de tissus à l'aide d'un métier est connu dans l'état de la technique.

La formation d'un feutre aiguilleté à partir de filaments est connue dans l'état de la technique. Cela peut se passer de deux manières: une méthode continue et une méthode discontinue. Dans le cas de la méthode continue, des filaments sont formés directement dans un processus ininterrompu par l'extrusion à partir de grains, un feutre aiguilleté est formé et des filaments sont liés dans le feutre aiguilleté. Dans le cas de la méthode discontinue, les fils de filament sont menés à une machine de feutre aiguilleté à partir de bobines. Là, les fils de filament sont ouverts, transformés dans la forme souhaitée en feutre aiguilleté et puis liés. De préférence, une méthode mécanique est utilisée pour la liaison des filaments dans le feutre aiguilleté. Un exemple est l'aiguilletage du feutre aiguilleté à l'aide d'aiguilles avec des barbelures. Par l'aiguilletage, les filaments sont mêlés, mais il y a également encore beaucoup de bouts de filament détachés ou de boucles qui peuvent s'accrocher dans les crochets de la bande velcro à l'aide de la bande velcro lors de l'attachement à une surface de sol ou un sol surélevé. Le renforcement chimique du feutre aiguilleté est moins préféré car cela peut avoir une influence sur le recyclage du feutre aiguilleté. Le renforcement thermique du feutre aiguilleté peut réduire le nombre de boucles ou de bouts de filament détachés qui peuvent être accrochés par les crochets d'une bande velcro.

Le feutre aiguilleté est laminé au tissu. Pour la phase de lamination, la face arrière du tissu est dirigée à travers une surface chauffée pour faire fondre au moins partiellement une partie des fils de chaîne les uns aux autres. Le tissu est dirigé à travers une série de rouleaux de support. Entre deux rouleaux de support, il y a une surface chauffée. La surface chauffée pousse contre la face arrière du tissu. La surface chauffée est de préférence réglable de sorte qu'elle puisse pousser plus ou moins contre la face arrière du tissu. La face arrière indique ici une face du tissu et non la position de la surface chauffée par rapport au tissu. La surface chauffée peut est positionnée horizontalement ou verticalement, au-dessus, en-dessous, à gauche ou à droite, devant ou sous le tissu. Il est clair pour l'homme du métier comment la disposition des rouleaux de support et l'orientation du tissu doivent être adaptées de sorte que la surface chauffée pousse contre la face arrière du tissu.

Selon un mode de réalisation, la surface chauffée est une plaque chauffante, un rouleau chauffant, une feuille en métal avec une pointe, une autre surface appropriée ou une combinaison du précédent.

Parce que le tissu est mené avec sa face arrière à travers la surface chauffée, une partie des fils de chaîne se fondent au moins partiellement les uns aux autres. En poussant la surface chauffée plus ou moins contre les fils de chaîne, le degré de fonte des fils de chaîne peut être modifié. D'autres paramètres qui l'influencent sont la température de la surface chauffée et la vitesse avec laquelle le tissu est dirigé à travers le corps chauffé.

Le tissu peut être dirigé à travers un, deux, trois ou plusieurs corps chauffés, dépendant du degré souhaité dans lequel une partie des fils de chaîne se sont fondus les uns aux autres.

A l'autre face du tissu, face au corps chauffé, un rouleau de support supplémentaire peut être positionné. Ce rouleau de support soutient le tissu pendant que le corps chauffé pousse contre la face arrière du tissu. En utilisant un rouleau de support face au corps chauffé, il est possible de pousser la surface chauffée plus fortement contre le tissu sans que le tissu ne déchire.

Selon un mode de réalisation, la lamination comprend l'utilisation de PES en tant qu'adhésif dans la couche intermédiaire.

Selon un mode de réalisation, un film autoadhésif par fusion PES est utilisé pendant la lamination. Le tissu est déroulé d'un premier rouleau, le film autoadhésif par fusion PES d'un deuxième rouleau et le feutre aiguilleté d'un troisième rouleau. Le tissu, le film autoadhésif et le feutre aiguilleté sont assemblés, dans lequel le film autoadhésif touche à la face arrière du tissu et au feutre aiguilleté. Le tout est chauffé, de sorte que le film autoadhésif par fusion PES devienne collant, et soit poussé fortement l'un contre l'autre entre deux rouleaux. Après refroidissement, le tissu et le feutre aiguilleté sont assemblés par le film autoadhésif. Le film autoadhésif forme une couche intermédiaire.

Selon un mode de réalisation, une poudre par fusion PES est utilisé pendant la lamination. Le tissu est déroulé d'un premier rouleau et le feutre aiguilleté d'un deuxième rouleau. Le poudre par fusion PES est distribué à l'aide d'un distributeur approprié à travers soit la face arrière du tissu soit une face du feutre aiguilleté soit la face arrière du tissu et une face du feutre aiguilleté. Le tissu et le feutre aiguilleté sont assemblés, dans lequel la face arrière du tissu est orientée vers le feutre aiguilleté et le poudre par fusion PES se trouve entre le tissu et le feutre aiguilleté. Le tout est chauffé, de sorte que le poudre par fusion PES devienne collant, et soit poussé fortement l'un contre l'autre entre deux rouleaux. Après refroidissement, le tissu et le feutre aiguilleté sont assemblés à l'aide de la poudre par fusion PES. Le poudre par fusion PES forme une couche intermédiaire.

Selon un mode de réalisation, la lamination comprend l'utilisation de molécules réactives pour former des interactions covalentes thermoréversibles dans la couche intermédiaire.

Selon un mode de réalisation, une composition comprenant des molécules réactives A est appliquée à la face arrière du tissu. A une face du feutre aiguilleté, une composition comprenant des molécules réactives B est appliquée. Le tissu et le feutre aiguilleté sont assemblés, dans lequel la face arrière du tissu et la face du feutre aiguilleté avec là-dessus la composition se touchent et dans lequel les circonstances sont telles que les molécules A et B réagissent et forment ainsi des interactions covalentes thermoréversibles. Une couche intermédiaire mince est formée qui relie le tissu et le feutre aiguilleté.

Selon un autre mode de réalisation, une composition comprenant des molécules réactives B est appliquée à la face arrière du tissu. A une face du feutre aiguilleté, une composition comprenant des molécules réactives B est également appliquée. Le tissu et le feutre aiguilleté sont assemblés, dans lequel la face arrière du tissu et la face du feutre aiguilleté avec là-dessus la composition sont orientés l'un vers l'autre. Entre le tissu et le feutre aiguilleté, une couche intermédiaire mince comprenant des molécules réactives A est appliquée. Les circonstances sont telles que les molécules A et B réagissent et forment ainsi des interactions covalentes thermoréversibles. La couche intermédiaire mince relie le tissu et le feutre aiguilleté.

Selon un mode de réalisation, la méthode comprend la phase supplémentaire avant la lamination de diriger la face arrière du tissu le long d'une surface chauffée pour faire fondre au moins partiellement une partie des fils de trame à la face arrière du tissu tissé machinalement ou mécaniquement avec une partie des fils de chaîne.

En augmentant la température de la au moins une surface chauffée, ou suite à la vitesse avec laquelle le tissu est dirigé le long de la surface chauffée, ou suite à par exemple la pression avec laquelle la surface chauffée pousse contre la face arrière du tissu, il est possible de faire fondre au moins partiellement non seulement une partie des fils de chaîne, mais également de faire fondre au moins partiellement une partie des fils de trame au fils de chaîne. Lorsqu'une tuile de tapis ou bande de tapis est coupée sur mesure lors de l'installation ou lors de la découpe de formes dans la tuile de tapis ou la bande de tapis, au moins une partie des fils de chaîne et de trame restent liés mutuellement, de sorte que la solidité et la stabilité dimensionnelle de la tuile de tapis ou de la bande de tapis soit conservée et la tuile de tapis ou la bande de tapis s'effiloche moins au bord coupant. Cet avantage s'applique également lors de la coupure de tuiles de tapis ou de bandes de tapis pendant le processus de production.

En plus, cela offre un tissu encore plus fort, dans lequel les fils de trame et de chaîne sont moins mobiles les uns par rapport aux autres, ce qui réduit la friction mutuelle et donc l'usure.

Selon un mode de réalisation, la coupure jusqu'aux tuiles de tapis ou bandes de tapis comprend la fonte au moins partiellement d'une partie des fils de chaîne et de trame au bord des tuiles de tapis ou des bandes de tapis.

Pour la coupure jusqu'aux tuiles de tapis ou bandes de tapis, plusieurs solutions sont connues. La coupure peut se faire avec des ciseaux traditionnels, automatisés ou non, ou avec une lame coupante tournante, de préférence de forme circulaire ou de toute autre forme appropriée, ou une machine à couper ultrasonore, ou à l'aide d'un filament ou d'un couteau chauffé, dans lequel le filament ou le couteau chauffé coupe à travers les tuiles de tapis ou bandes de tapis fondues.

A cause du filament ou du couteau chauffé, une partie des fils de chaîne et de trame se sont alors au moins partiellement fondus mutuellement au bord des tuiles de tapis ou des bandes de tapis. Cela renforce de manière supplémentaire le bord coupant et diminue encore plus l'effilochement du bord coupant. Il n'est pas nécessaire de renforcer les bords des tuiles de tapis ou des bandes de tapis avec une piqûre ou une couche de colle supplémentaire ou un revêtement sur le bord, de sorte que l'on réduise le poids.

Selon un mode de réalisation, après la coupure jusqu'aux tuiles de tapis ou bandes de tapis à l'aide de par exemple des ciseaux traditionnels, une lame coupante tournante, ou une machine à couper ultrasonore, une partie des fils de chaîne et de trame se sont fondus au moins partiellement mutuellement au bord des tuiles de tapis ou bandes de tapis à l'aide d'un filament, d'un couteau chauffé, d'un laser ou de tout autre dispositif approprié. Par conséquent, le même effet renforçant au bord est obtenu que lors de l'utilisation d'un filament ou d'un couteau chauffé pour la coupure jusqu'aux tuiles de tapis ou bandes de tapis.

Selon un mode de réalisation, la méthode comprend la phase supplémentaire pendant la lamination de laminer une membrane d'essentiellement 100% polyester (PES) à la face arrière du tissu tissé machinalement ou mécaniquement.

La lamination de la membrane à la face arrière du tissu tissé machinalement ou mécaniquement se fait après la fonte au moins partielle des fils de chaîne ou la fonte au moins partielle des fils de chaîne et de trame.

Selon un mode de réalisation, la lamination de la membrane comprend l'utilisation de PES en tant qu'adhésif. Cela garantit que la tuile de tapis ou la bande de tapis est complètement recyclable.

Selon un mode de réalisation, la lamination de la membrane comprend l'utilisation de molécules réactives pour former des interactions covalentes thermoréversibles entre la face arrière du tissu et la membrane. Cela garantit que la tuile de tapis ou la bande de tapis est complètement recyclable.

Suite à la lamination de la membrane à la face arrière du tissu, la stabilité dimensionnelle de la tuile de tapis ou de la bande de tapis est augmentée dans toutes les directions parallèles à la surface d'utilisation de la tuile de tapis ou de la bande de tapis.

Dans un troisième aspect, l'invention se rapporte à la fabrication d'une tuile de tapis ou une bande de tapis selon le premier aspect, à l'aide d'une méthode selon le deuxième aspect.

Il sera clair pour l'homme du métier qu'un tuile de tapis ou une bande de tapis selon la présente invention ne peut pas être utilisée uniquement dans des bâtiments de bureau et commerciaux, mais également dans d'autres bâtiments tels que des hôpitaux, des écoles et même des maisons.

La présente invention se décrite maintenant plus en détail référant aux exemples ou figures non-limitatives.

### DESCRIPTION DE FIGURE

**La** **figure 1** montre une section d'un mode de réalisation de la présente invention.

Une tuile de tapis ou une bande de tapis en polyester comprend un feutre aiguilleté 1, qui est laminé à un tissu lisse 6 au moyen d'une couche intermédiaire 2. La couche intermédiaire 2 comprend l'adhésif PES ou des molécules réactives pour former des interactions covalentes thermoréversibles. Le tissu lisse 6 comprend un premier groupe de fils de chaîne 3 et un deuxième groupe de fils de chaîne 4. Les fils de chaîne 3 et 4 sont juxtaposés alternativement dans la direction longitudinale du tissu. Le tissu lisse 6 comprend des fils de trame 5. Les fils de trame 5 se situent transversalement sur la direction des fils de chaîne 3 et 4. Un premier fil de trame 5 se situe en-dessous des fils de chaîne 3 et au-dessus des fils de chaîne 4. Le suivant fil de trame 5 se situe ensuite au-dessus des fils de chaîne 3 et en-dessous des fils de chaîne 4. Le tissu est ensuite constitué de cette manière. La liaison obtenue est une liaison plate. Un reps de trame peut être obtenu de manière similaire si des groupes de deux fils de chaîne 3 et des groupes de deux fils de chaîne 4 sont juxtaposés alternativement dans la direction longitudinale du tissu. Une partie des fils de chaîne 3 et 4 se sont fondus mutuellement au moins partiellement à la face arrière du tissu lisse 6. Cela est montré sur la figure 1. De préférence, une partie des fils de chaîne 3 et 4 se sont fondus au moins partiellement à la face arrière du tissu lisse 6 à une partie des fils de trame 5. De préférence, une partie des fils de chaîne 3 et 4 et une partie des fils de trame 5 se sont fondus mutuellement au moins partiellement aux bords d'une tuile de tapis ou bande de tapis en polyester.

**La** **figure 2** montre schématiquement un modèle moléculaire d'une liaison entre un tissu et un feutre aiguilleté selon un mode de réalisation de la présente invention.

Une composition comprenant des molécules réactives B est appliquée à la face arrière du tissu 6 et à une face du feutre aiguilleté 1. La face arrière du tissu 6 et la face avec là-dessus la composition appliquée comprenant des molécules réactives B du feutre aiguilleté 1 se sont rapprochées, avec entre ces faces, une couche intermédiaire avec des molécules réactives A. Après que la réaction entre les molécules A et B a eu lieu, une liaison 7 entre le tissu 6 et le feutre aiguilleté 1 est formée. La liaison 7 utilise les interactions covalentes entre les molécules A et B.

**La** **figure 3** montre un dispositif approprié pour au moins partiellement fondre une partie des fils de chaîne les uns aux autres selon un mode de réalisation de la méthode de la présente invention.

Le tissu 50' est dirigé à travers des rouleaux de support 41 et 42. La direction est de rouleau de support 41 à rouleau de support 42. Entre les deux rouleaux de support 41 et 42, la surface chauffée 30 se trouve. La surface chauffée pousse avec une pointe 33 contre la face arrière du tissu 50'. Une partie des fils de chaîne se sont fondus mutuellement au moins partiellement à la face arrière du tissu 50'. Les fils de chaîne fondus sont distribués jusqu'à une surface essentiellement plate grâce au mouvement à travers la pointe 33 de la surface chauffée 30. Après, ils refroidissent et forment le tissu 50, qui est plus fort, qui a une plus grande stabilité dimensionnelle et qui est plus résistent à l'usure et qui s'effiloche moins aux bords que le tissu 50'. La surface chauffée 30 peut être déplacée sur une distance d. Cette distance d est par exemple de 0 mm à 50 mm. En prenant une distance d supérieure à 0 mm, la pointe 33 de la surface chauffée 30 pousse contre la face arrière du tissu. La distance requise d est déterminée par le résultat souhaité de la fonte au moins partielle d'une partie des fils de chaîne, ensemble avec la température de la surface chauffée 30 et de sa pointe 33, la vitesse avec laquelle le tissu 50' est dirigé à travers la pointe 33 et le tissu 50' même. Si un tissu 50' n'est pas résistant à une distance grande d, d'autres variations des paramètres vitesse, distance d et température de la surface chauffée 30 et de sa pointe 33 sont possibles pour obtenir le résultat souhaité.

**La** **figure 4** montre une vue d'en haut d'un mode de réalisation de la présente invention.

Une tuile de tapis en polyester comprend un feutre aiguilleté 1, qui est laminé à un tissu lisse 6 au moyen d'une couche intermédiaire 2. Le tissu lisse 6 comprend un premier groupe de fils de chaîne 3 et un deuxième groupe de fils de chaîne 4. Les fils de chaîne 3 et 4 sont juxtaposés alternativement dans la direction longitudinale du tissu. Le tissu lisse 6 comprend des fils de trame 5. Les fils de trame 5 se situent transversalement sur la direction des fils de chaîne 3 et 4. Un premier fil de trame 5 se situe en-dessous des fils de chaîne 3 et au-dessus des fils de chaîne 4. Le fil de trame 5 est complètement caché par les fils de chaîne 3 et les fils de chaîne 4 sont complètement cachés par les fils de chaîne 3 et les fils de trame 5. Le suivant fil de trame 5 se situe ensuite au-dessus des fils de chaîne 3 et en-dessous des fils de chaîne 4. Le fil de trame 5 est complètement caché par les fils de chaîne 4 et les fils de chaîne 3 sont complètement cachés par les fils de chaîne 4 et les fils de trame 5. Le tissu est ensuite constitué de cette manière. La liaison obtenue est une liaison plate.

A certains endroits, on a localement dévié de la liaison lisse. Flotteur supérieur 9 est formé par un patron de liaison avec une densité de liaison de chaîne:trame de 2:1. Fil de trame 5 flotte au-dessus de deux fils de chaîne 4. Flotteur supérieur 8 est formé par un patron de liaison avec une densité de liaison de chaîne:trame de 3:1. Fil de trame 5 flotte au-dessus de trois fils de chaîne 4.

Une partie des fils de chaîne 3 et 4 se sont fondus mutuellement au moins partiellement à la face arrière du tissu lisse 6. De préférence, une partie des fils de chaîne 3 et 4 se sont fondus au moins partiellement à la face arrière du tissu lisse 6 à une partie des fils de trame 5. De préférence, une partie des fils de chaîne 3 et 4 et une partie des fils de trame 5 se sont fondus mutuellement au moins partiellement aux bords 10 de la tuile de tapis en polyester. Cela est par exemple possible par l'utilisation d'un filament lors de la coupure jusqu'aux tuiles de tapis. Cela offre des bords droits et les fils de chaîne et/ou de trame coupés s'effilochent pas ou moins.

Il est clair pour l'homme du métier que cet exemple s'applique également aux bandes de tapis.

### EXEMPLES

L'invention sera maintenant décrite à l'aide de l'exemple suivant, sans y être limité.

L'exemple se rapporte à un mode de réalisation d'une tuile de tapis ou d'une bande de tapis en polyester qui convient au marché contractuel, plus particulièrement des bâtiments de bureau et commerciaux, selon l'invention. La tuile de tapis ou la bande de tapis comprend un tissu lisse, une couche intermédiaire et un feutre aiguilleté.

Tant le tissu lisse que le feutre aiguilleté comprennent 100% de PES ignifuge. La couche intermédiaire comprend une colle PES. Par conséquent, la tuile de tapis ou la bande de tapis est 100% recyclable de manière simple après qu'il a été remplacé par une nouvelle tuile de tapis ou bande de tapis dans le bâtiment de bureau ou commercial.

Le feutre aiguilleté est un textile non-tissé. Sur la surface de sol ou le sol surélevé dans le bâtiment de bureau ou commercial, des bandes de velcro du type HTH577 sont collées. Les maintes bouts de filament détachés ou les boucles dans le feutre aiguilleté s'accrochent dans les crochets de la bande de velcro. Par conséquent, la tuile de tapis ou la bande de tapis peut rapidement être installée, mais également être remplacée sur la surface de sol ou le sol surélevé. La tuile de tapis ou la bande de tapis doit simplement être arrachée des bandes de velcro et la nouvelle tuile de tapis ou bande de tapis doit être adhérée à la bande de velcro. Il n'y a pas de restes de colle sur la surface de sol ou le sol surélevé qui doivent être enlevés. Il n'y a pas non plus de restes de colle sur le feutre aiguilleté, ce qui simplifie le recyclage. Il est clair pour l'homme du métier que les tuiles de tapis ou bandes de tapis selon la présente invention peuvent aussi être installées au moyen de colle, d'un adhésif double-face ou simplement détaché sur la surface de sol ou le sol surélevé.

Le tissu comprend des fils de chaîne et de trame avec un numéro de fil de 2200 dtex. Les fils ont un allongement de rupture d'en moyenne 30% et une résistance à la traction minimale de 3 g/den, testé selon ISO 2062. Le rétrécissement moyen à l'ébullition des fils s'élève, selon la norme ISO 12590, en moyenne 1,5%. Il y a 17 fils de chaîne par cm de tissu et 5 fils de trame par cm de tissu. Cela offre un tissu fort, qui est également léger. Le poids du tissu est limité à 570 g/m².

Un autre exemple d'un tissu comprend des fils de chaîne et de trame avec un numéro de fil de 3300 dtex. Il y a 17 fils de chaîne par cm de tissu et 6 fils de trame par cm de tissu. Le poids du tissu est, dans ce cas, limité à 950 g/m².

Une partie des fils de chaîne et des fils de trame se sont fondus mutuellement au moins partiellement à la face arrière du tissu. Cela renforce le tissu et augmente la stabilité dimensionnelle. Lors de la coupure des tuiles de tapis ou des bandes de tapis, les bords ne s'effilocheront pas ou presque pas. Aussi lors de la coupure sur mesure ou de la découpe de formes dans les tuiles de tapis ou bandes de tapis pendant l'installation, la tuile de tapis ou la bande de tapis s'effilochera moins aux bords coupants.

Les fils de chaîne et de trame sont moins mobiles les uns par rapport aux autres, ce qui mène à moins de friction entre les fils de chaîne et de trame et donc également moins d'usure lors de la charge quotidienne des passant dans le bâtiment de bureau ou commercial et des chariots. Parce que le tissu est plus fort et a une plus grande stabilité dimensionnelle suite à la fonte au moins partielle d'une partie des fils de chaîne et de trame, il n'est pas nécessaire d'utiliser de la colle pour fixer les noeuds entre les fils de chaîne et de trame. La couche intermédiaire, comprenant de la colle, est donc plus légère. Le poids de la couche intermédiaire est limité à 130 g/m².

Les tuiles de tapis ou bandes de tapis sont coupées du tapis à l'aide d'une machine à couper ultrasonore. Après, au bord coupant, une partie des fils de trame et une partie des fils de chaîne se sont fondus mutuellement au moins partiellement à l'aide d'un laser. Cela renforce de manière supplémentaire le bord coupant et diminue encore plus l'effilochement du bord coupant. Il n'est pas nécessaire de renforcer les bords des tuiles de tapis ou des bandes de tapis avec une piqûre ou une couche de colle supplémentaire ou un revêtement sur le bord, de sorte que l'on réduise le poids.

Le feutre aiguilleté est approprié pour donner la stabilité dimensionnelle nécessaire à la tuile de tapis ou bande de tapis. Le feutre aiguilleté est approprié pour augmenter le confort de marche des passants dans le bâtiment de bureau ou commercial et pour servir d'isolation sonore. Parce que le tissu est plus fort suite à la fonte au moins partielle d'une partie des fils de chaîne et de trame, le tissu a déjà une certaine stabilité dimensionnelle. Par conséquent, il est possible d'utiliser un feutre aiguilleté plus mince pour la tuile de tapis ou bande de tapis. Le feutre aiguilleté a un poids maximal de 150 g/m². Le poids total par unité de surface de la tuile de tapis ou de la bande de tapis est alors 850 g/m².

La tuile de tapis ou la bande de tapis a été testée selon la norme FAR 25.853 concernant l'inflammabilité, plus particulièrement FAR 25.853(A)-App.F Part I para (a)(1)(ii) Measurement of flammability of aircraft material. Le test a été réalisé dans une armoire à l'abri du courant d'air, conformément au « Federal Test Method Standard 191, Method 5903.2 ». Trois échantillons de la tuile de tapis ou de la bande de tapis de 75 mm sur 305 mm ont été exposés pendant 60 s à une flamme d'un bec Bunsen avec une température d'au moins 843°C. Les échantillons étaient suspendus de manière verticale dans leur direction longitudinale à 20 mm au-dessus de la pointe du bec Bunsen. La flamme du bec Bunsen a une hauteur de 40 mm mesurée à partir de la pointe du bec Bunsen. La tuile de tapis ou la bande de tapis a ensuite brûlé en moyenne au maximum 2 s sur une longueur et largeur inférieures à 80 mm. Il n'y avait pas de parties brûlantes de la tuile de tapis ou bande de tapis qui tombaient. Par conséquent, la tuile de tapis ou bande de tapis répond à la norme, qui requiert que, après enlèvement de la flamme, la tuile de tapis ou la bande de tapis continue à brûler au maximum 15 s, que la tuile de tapis ou la bande de tapis brûle sur une longueur maximale de 152 mm et que des parties brûlantes de la tuile de tapis ou de la bande de tapis brûlent au maximum 5 s.

La tuile de tapis ou la bande de tapis répond au moins aux exigences pour la classification Cfl-s1 selon la norme d'incendie EN 13501-1 2007.

La tuile de tapis ou la bande de tapis a été soumise à un test Vetterman et à un test Lisson. Le test Vetterman simule l'usure dans des conditions de laboratoire. Le test Lisson détermine la perte de massa et la liaison de fibres ou de fils, après que la tuile de tapis ou la bande de tapis a été soumise à un nombre prescrit de passages doubles d'une roue quadrupède. Pour les deux tests, la tuile de tapis ou la bande de tapis a obtenu la classification la plus haute de 33, ce qui signifie qu'elle est appropriée pour une utilisation intensive lourde. La tuile de tapis ou la bande de tapis est également testée selon et répond à la norme EN 15114 pour la détermination de la résistance au cisaillement, la norme EN 985 concernant la méthode de test de fauteuils de bureau, la norme ISO 6356 concernant la tendance de former de l'électricité statique dans des revêtements de sol en textile et en aggloméré laminé et la norme ISO 2551 pour la détermination des changements dimensionnels suite aux conditions d'eau et de chaleur variantes. Le respect de toutes ces normes garantit que la tuile de tapis ou la bande de tapis est appropriée pour la charge quotidienne des passants dans le bâtiment de bureau ou commercial et des chariots.

## Revendications

1. Une tuile de tapis ou bande de tapis qui convient au marché contractuel, plus particulièrement des bâtiments de bureau ou commerciaux, comprenant
- un tissu tissé mécaniquement, comprenant une face avant comme surface d'utilisation et une face arrière, comprenant des fils de chaîne et de trame d'essentiellement 100% polyester (PES) thermoplastique ignifuge,
- un feutre aiguilleté d'essentiellement 100% de polyester (PES) thermoplastique ignifuge,
- une couche intermédiaire entre le feutre aiguilleté et le tissu tissé mécaniquement,
**caractérisé en ce qu'**une partie des fils de chaîne à la face arrière du tissu mécaniquement tissé se sont au moins partiellement fondus les uns aux autres.

2. Tapis selon la revendication 1, **caractérisé en ce que** le numéro de fil des fils de chaîne et de trame est 1100 dtex à 4400 dtex.

3. Tapis selon la revendication 1 ou 2, **caractérisé en ce que** le nombre de fils de chaîne par cm de tissu s'élève à 8 à 30 et que le nombre de fils de trame par cm de tissu s'élève à 3 à 10.

4. Tapis selon une des revendications précédentes 1 à 3, **caractérisé en ce que** le poids de la tuile de tapis ou de la bande de tapis s'élève à au maximum 2000 g/m².

5. Tapis selon une des revendications précédentes 1 à 4, **caractérisé en ce que** le tissu tissé mécaniquement et le feutre aiguilleté sont laminés l'un à l'autre à l'aide de la couche intermédiaire.

6. Tapis selon une des revendications précédentes 1 à 5, **caractérisé en ce que** la couche intermédiaire comprend l'adhésif PES.

7. Tapis selon une des revendications précédentes 1 à 5, **caractérisé en ce que** la tuile de tapis ou la bande de tapis comprend des molécules réactives pour la formation des interactions covalentes thermoréversibles dans la couche intermédiaire.

8. Tapis selon une des revendications précédentes 1 à 7, **caractérisé en ce qu'**une partie des fils de trame à la face arrière du tissu tissé mécaniquement s'est au moins partiellement fondu avec une partie des fils de chaîne.

9. Tapis selon une des revendications précédentes 1 à 8, **caractérisé en ce que** le tuile de tapis ou la bande de tapis comprend une membrane d'essentiellement 100% de polyester (PES) entre le tissu tissé mécaniquement et la couche intermédiaire.

10. Une méthode pour la fabrication d'une tuile de tapis ou bande de tapis qui convient au marché contractuel, plus particulièrement des bâtiments de bureau ou commerciaux, comprenant
- le tissage mécanique d'un tissu, comprenant une face avant comme surface d'utilisation et une face arrière, comprenant des fils de chaîne et de trame d'essentiellement 100% polyester (PES) thermoplastique ignifuge,
- la fabrication d'un feutre aiguilleté d'essentiellement 100% de polyester (PES) thermoplastique ignifuge,
- la lamination du feutre aiguilleté au tissu à l'aide d'une couche intermédiaire,
- la coupure des tuiles de tapis ou bandes de tapis,
**caractérisé en ce que** la méthode comprend la phase supplémentaire avant la lamination de diriger la face arrière du tissu le long d'une surface chauffée pour faire fondre au moins partiellement une partie des fils de chaîne à la face arrière du tissu tissé mécaniquement les uns aux autres.

11. La méthode selon la revendication 10, **caractérisé en ce que** la lamination comprend l'utilisation de PES en tant qu'adhésif dans la couche intermédiaire.

12. La méthode selon la revendication 10, **caractérisé en ce que** la lamination comprend l'utilisation de molécules réactifs pour former des interactions covalentes thermoréversibles dans la couche intermédiaire.

13. La méthode selon la revendication 10, 11 ou 12, **caractérisé en ce que** la méthode comprend la phase supplémentaire avant la lamination de diriger la face arrière du tissu le long d'une surface chauffée pour faire fondre au moins partiellement une partie des fils de trame à la face arrière du tissu tissé mécaniquement avec une partie des fils de chaîne.

14. La méthode selon une des revendications précédentes 10 à 13, **caractérisé en ce que** la coupure jusqu'aux tuiles de tapis ou bandes de tapis comprend la fonte au moins partiellement d'une partie des fils de chaîne et de trame au bord des tuiles de tapis ou des bandes de tapis.

15. La méthode selon une des revendications 10 à 14, **caractérisé en ce que** la méthode comprend la phase supplémentaire pendant la lamination de laminer une membrane d'essentiellement 100% polyester (PES) à la face arrière du tissu tissé mécaniquement.

## Patentansprüche

1. Eine Teppichfliese oder ein Teppichstreifen, die/der für den Objektmarkt geeignet ist, insbesondere für Büro- oder Gewerbegebäude, umfassend
a. ein mechanisch gewebtes Gewebe, umfassend eine Vorderseite als Nutzfläche und eine Rückseite, umfassend Kett- und Schussfäden aus im Wesentlichen 100 % flammhemmendem thermoplastischem Polyester (PES),
b. ein Nadelfilz aus im Wesentlichen 100 % flammhemmendem thermoplastischem Polyester (PES),
c. eine Zwischenschicht zwischen dem Nadelfilz und dem mechanisch gewebten Gewebe,
**dadurch gekennzeichnet, dass** ein Teil der Kettfäden auf der Rückseite des mechanisch gewebten Gewebes zumindest teilweise aneinander verschmolzen sind.

2. Teppich nach Anspruch 1, **dadurch gekennzeichnet, dass** die Fadenzahl der Kett- und Schussfäden 1100 dtex bis 4400 dtex beträgt.

3. Teppich nach Anspruch 1 oder 2, **dadurch gekennzeichnet, dass** die Anzahl der Kettfäden pro cm Gewebe 8 bis 30 beträgt und die Anzahl der Schussfäden pro cm Gewebe 3 bis 10 beträgt.

4. Teppich nach einem der vorhergehenden Ansprüche 1 bis 3, **dadurch gekennzeichnet, dass** das Gewicht der Teppichfliese oder des Teppichstreifens maximal 2000 g/m² beträgt.

5. Teppich nach einem der vorhergehenden Ansprüche 1 bis 4, **dadurch gekennzeichnet, dass** das mechanisch gewebte Gewebe und der Nadelfilz mithilfe der Zwischenschicht miteinander laminiert werden.

6. Teppich nach einem der vorhergehenden Ansprüche 1 bis 5, **dadurch gekennzeichnet, dass** die Zwischenschicht PES-Klebstoff umfasst.

7. Teppich nach einem der vorhergehenden Ansprüche 1 bis 5, **dadurch gekennzeichnet, dass** die Teppichfliese oder der Teppichstreifen reaktive Moleküle zur Ausbildung thermoreversibler kovalenter Wechselwirkungen in der Zwischenschicht umfasst.

8. Teppich nach einem der vorhergehenden Ansprüche 1 bis 7, **dadurch gekennzeichnet, dass** ein Teil der Schussfäden auf der Rückseite des mechanisch gewebten Gewebes zumindest teilweise mit einem Teil der Kettfäden verschmolzen ist.

9. Teppich nach einem der vorhergehenden Ansprüche 1 bis 8, **dadurch gekennzeichnet, dass** die Teppichfliese oder der Teppichstreifen zwischen dem mechanisch gewebten Gewebe und der Zwischenschicht eine Membran aus im Wesentlichen 100 % Polyester (PES) umfasst.

10. Ein Verfahren zur Herstellung einer Teppichfliese oder eines Teppichstreifens, die/der für den Objektmarkt, insbesondere Büro- oder Gewerbegebäude, geeignet ist, umfassend
a. das mechanische Weben eines Gewebes, umfassend eine Vorderseite als Nutzfläche und eine Rückseite, umfassend Kett- und Schussfäden aus im Wesentlichen 100 % flammhemmendem thermoplastischem Polyester (PES),
b. die Herstellung eines Nadelfilzes aus im Wesentlichen 100 % flammhemmendem thermoplastischem Polyester (PES),
c. das Laminieren des Nadelfilzes mit dem Gewebe mittels einer Zwischenschicht,
d. das Schneiden der Teppichfliesen oder Teppichstreifen,
**dadurch gekennzeichnet, dass** das Verfahren vor dem Laminieren die zusätzliche Phase umfasst, die Rückseite des Gewebes entlang einer erhitzten Fläche zu führen, um einen Teil der Kettfäden auf der Rückseite des mechanisch gewebten Gewebes zumindest teilweise aneinander zu verschmelzen.

11. Das Verfahren nach Anspruch 10, **dadurch gekennzeichnet, dass** die Laminierung die Verwendung von PES als Klebstoff in der Zwischenschicht umfasst.

12. Das Verfahren nach Anspruch 10, **dadurch gekennzeichnet, dass** die Laminierung die Verwendung reaktiver Moleküle zur Ausbildung thermoreversibler kovalenter Wechselwirkungen in der Zwischenschicht umfasst.

13. Das Verfahren nach Anspruch 10, 11 oder 12, **dadurch gekennzeichnet, dass** das Verfahren vor dem Laminieren die zusätzliche Phase umfasst, die Rückseite des Gewebes entlang einer erhitzten Fläche zu führen, um einen Teil der Schussfäden auf der Rückseite des mechanisch gewebten Gewebes zumindest teilweise mit einem Teil der Kettfäden aneinander zu verschmelzen

14. Das Verfahren nach einem der vorhergehenden Ansprüche 10 bis 13, **dadurch gekennzeichnet, dass** das Schneiden der Teppichfliesen oder Teppichstreifen das zumindest teilweise Aufschmelzen eines Teils der Kett- und Schussfäden am Rand der Teppichfliesen oder Teppichstreifen umfasst.

15. Das Verfahren nach einem der Ansprüche 10 bis 14, **dadurch gekennzeichnet, dass** das Verfahren beim Laminieren die zusätzliche Phase umfasst, eine Membran aus im Wesentlichen 100 % Polyester (PES) auf die Rückseite des mechanisch gewebten Gewebes zu laminieren.

## Claims

1. A carpet tile or carpet strip which is suitable for the contract market, particularly office or commercial buildings, including
a. a mechanically woven fabric, comprising a front side as a use surface and a back side, comprising warp and weft yarns of essentially 100% thermoplastic flame retardant polyester (PES),
b. a needle felt made of essentially 100% thermoplastic flame retardant polyester (PES),
c. an intermediate layer between the needle felt and the mechanically woven fabric,
**characterized in that** a part of the warp yarns on the back side of the mechanically woven fabric have at least partially fused to each other.

2. A carpet according to claim 1, **characterized in that** the yarn number of the warp and weft yarns is 1100 dtex to 4400 dtex .

3. A carpet according to claim 1 or 2, **characterized in that** the number of warp yarns per cm of fabric is 8 to 30 and the number of weft yarns per cm of fabric is 3 to 10.

4. A carpet according to one of the preceding claims 1 to 3, **characterized in that** the weight of the carpet tile or the carpet strip is at most 2000 g/m².

5. A carpet according to one of the preceding claims 1 to 4, **characterized in that** the mechanically woven fabric and the needle felt are laminated to each other with the aid of the intermediate layer.

6. A carpet according any of the preceding claims 1 to 5, **characterized in that** the intermediate layer comprises PES adhesive.

7. A Carpet according to one of the preceding claims 1 to 5, **characterized in that** the carpet tile or carpet strip comprises reactive molecules for the formation of thermoreversible covalent interactions in the intermediate layer.

8. A carpet according to any of the preceding claims 1 to 7, **characterized in that** a part of the weft yarns on the back side of the mechanically woven fabric has at least partially fused with a part of the warp yarns.

9. A carpet according to any of the preceding claims 1 to 8, **characterized in that** the carpet tile or carpet strip comprises a membrane of essentially 100% polyester (PES) between the mechanically woven fabric and the intermediate layer.

10. A method of manufacturing a carpet tile or carpet strip suitable for the contract market, particularly office or commercial buildings, comprising
a. the mechanical weaving of a fabric, comprising a front side as a surface of use and a back side, comprising warp and weft yarns of essentially 100% thermoplastic flame retardant polyester (PES),
b. the manufacture of a needle felt of essentially 100% thermoplastic flame retardant polyester (PES),
c. the lamination of the needle felt to the fabric with an intermediate layer,
d. the cutting down to carpet tiles or carpet strips,
**characterized in that** the method comprises the further step prior to lamination of directing the backside of the fabric along a heated surface to at least partially melt a part of the warp yarns at the backside of the mechanically woven fabric together.

11. The method according to claim 10, **characterized in that** the lamination comprises the use of PES as an adhesive in the intermediate layer.

12. The method according to claim 10, **characterized in that** the lamination comprises the use of reactive molecules to form thermoreversible covalent interactions in the intermediate layer.

13. The method according to claim 10, 11 or 12, **characterized in that** the method comprises the additional step before lamination of directing the backside of the fabric along a heated surface to at least partially melt a part of the weft yarns on the backside of the mechanically woven fabric with a part of the warp yarns.

14. The method according to any of the preceding claims 10 to 13, **characterized in that** the cutting down to carpet tiles or carpet strips comprises melting at least a part of the warp and weft yarns at the edge of the carpet tiles or carpet strips.

15. The method according to any of claims 10 to 14, **characterized in that** the method comprises the additional step during lamination of laminating a membrane of essentially 100% polyester (PES) to the backside of the mechanically woven fabric.
